# EUROPÄISCHE PATENTSCHRIFT

(11) **EP 0 868 398 B1**
(45) Veröffentlichungstag und Bekanntmachung des Hinweises auf die Patenterteilung: **22.05.2002**
(21) Anmeldenummer: 96944615.2
(22) Anmeldetag: 20.12.1996
(51) Int. Cl.: C01B 21/14, B01D 3/38, B01D 1/28

(54) **VERFAHREN ZUR ABTRENNUNG VON MITTELSIEDERN AUS EINEM GEMISCH AUS LEICHT-, MITTEL- UND HOCHSIEDERN**
PROCESS FOR SEPARATING MEDIUM BOILING SUBSTANCES FROM A MIXTURE OF LOW, MEDIUM AND HIGH BOILING SUBSTANCES
PROCEDE DE SEPARATION DE SUBSTANCES A POINT D'EBULLITION MOYEN CONTENUES DANS UN MELANGE DE SUBSTANCES A BAS, MOYEN ET HAUT POINTS D'EBULLITION

(30) Priorität: 20.12.1995 DE 19547758; 29.07.1996 US 688281
(43) Veröffentlichungstag der Anmeldung: 07.10.1998
(73) Patentinhaber: BASF AKTIENGESELLSCHAFT, 67056 Ludwigshafen (DE)
(72) Erfinder: WATZENBERGER, Otto, 68199 Mannheim (DE)
(74) Vertreter: Kinzebach, Werner, Dr.
(86) Internationale Anmeldenummer: EP9605772
(87) Internationale Veröffentlichungsnummer: WO9722550

(56) Entgegenhaltungen:
- EP-A- 0 339 700
- DE-A- 2 730 561
- DE-C- 4 324 410
- US-A- 5 385 646
- US-A- 5 472 679
- R. PERRY: "PERRY'S CHEMICAL ENGINEERS' HANDBOOK" 1985 , MC GRAW-HILL , NEW YORK (US) XP002030269 siehe Seite 13-5 - Seite 13-10; Abbildungen 13-7G
- W. GERHARTZ : "Ullmann's Encyclopedia of Industrial Chemistry, Band B3" 1988 , VCH-VERLAG , WEINHEIM (DE) XP002030270 in der Anmeldung erwähnt siehe Seite 4-46 - Seite 4-50

## Beschreibung

Die vorliegende Erfindung betrifft ein Verfahren zur Abtrennung von Mittelsiedern aus einem Gemisch aus Leicht-, Mittel- und Hochsieder, das in eine Leicht- und Mittelsieder-enthaltende Fraktion und eine Leicht- und Schwersieder-enthaltende Fraktion aufgetrennt wird.

In der chemischen Industrie steht man häufig vor dem Problem, daß aus einem flüssigen Mehrstoffgemisch, das aus einer Leicht-(L), Mittel-(M) und Hochsiederfraktion(H) besteht, der Mittelsieder in reiner Form, oder nur noch mit Anteilen an Leichtsiedern versetzt, abgetrennt werden muß.

Um dies zu erreichen, kann man die bekannten Destillationsmethoden anwenden, beispielsweise diejenigen, die in Ullmann's Encyclopedia of Industrial Chemistry Vol. B3, Seite 4-46 ff beschrieben sind. Den bekannten Destillationsmethoden ist gemeinsam, daß der Hochsieder über Sumpf in reiner Form oder gegebenenfalls mit Restanteilen an Mittelsieder abgezogen wird und daß die Abtrennung des Mittelsieders über Kopf der Kolonne unter Temperaturen erfolgt, die weitgehend durch die Konzentration des Hochsieders und dessen Siedetemperatur bestimmt werden. Weiter ist bei den bekannten Methoden keine gemeinsame Abtrennung eines Leicht- und Mittelsiedergemisches bei gleichzeitiger mittelsiederfreier Abtrennung eines Leicht- und Hochsiedergemisches möglich. In vielen Fällen wäre dies jedoch wünschenswert, insbesondere wenn Leicht- und Hochsieder einer gemeinsamen weiteren Nutzung (Verkauf, Verwertung, Entsorgung) unterzogen werden sollen.

In der oben erwähnten Publikation wird auf Seite 4-48 die Verwendung von Seitenkolonnen zum Abtrennen von Mittelsieder aus dem Leicht-, Mittel-, Hochsiedergemisch (L, M, H-Gemisch) beschrieben. Auch in diesem Fall erfolgt immer eine Trennung von Leicht- und Hochsieder. Gleiches gilt für die auf den Seiten 4-62 und 4-63 in der erwähnten Publikation beschriebenen direkt oder indirekt gekoppelten Kolonnen. In allen diesen Fällen muß letztlich der Mittelsieder destillativ vom Hochsieder abgetrennt werden, was immer Siedetemperaturen erfordert, die wenigstens gleich der des Mittelsieders und im Extremfall nahe bei der Siedetemperatur des Hochsieders und damit sehr hoch sind. Dies gilt insbesondere dann, wenn eine vollständige Abtrennung des Mittelsieders vom Hochsieder zu bewerkstelligen ist. Es können so hohe Temperaturen auftreten, daß es auch bei thermisch weniger labilen Stoffen zu einer Zersetzung oder chemischen Umwandlung (Polymerisation etc.) der beteiligten Stoffe kommen kann. Aus diesem Grund sind für derartige Trennungen oft aufwendige Destillationsverfahren, beispielsweise unter Vakuumbedingungen betriebene schonende Destillationsverfahren (Dünnschichtverdampfer, Molekularstrahldestillation etc.) erforderlich. Diese Destillationsverfahren besitzen den Nachteil, daß die Durchsatzmengen sehr gering sind. Dies führt zu hohen Investitions- und Produktkosten, was bedeuten kann, daß die an sich vorteilhafte destillative Abtrennung nicht wirtschaftlich durchführbar ist.

Weiter sind Sonderverfahren zur Auftrennung schwierig trennbarer Flüssigkeitsgemische bekannt. Sonderverfahren kommen nur dann in Frage, wenn sie kostengünstiger sind oder übliche andere Verfahren versagen. Häufig kommen sie bei thermisch nur begrenzt belastbaren Substanzen zur Anwendung, d.h. wenn der Siedepunkt oberhalb oder nahe der Zersetzungstemperatur liegt. Eine bekannte Methode zur Abtrennung schwer flüchtiger Komponenten aus Gemischen, die miteinander nicht mischbare Komponenten enthalten, stellt die Trägergasdestillation dar. Sie beruht darauf, daß in einem Gemisch nicht miteinander mischbarer Stoffe sich jeder Stoff so verhält, als wäre der andere nicht vorhanden, d.h. jeder Stoff besitzt bei einer bestimmten Temperatur einen Partialdruck, der unabhängig von der Zusammensetzung der Mischung gleich dem Dampfdruck des betreffenden Stoffes ist. Somit ist der Druck über einem derartigen Gemisch gleich der Summe der Dampfdrücke der Einzelkomponenten. Ein bekanntes Beispiel hierfür ist das System Wasser/Brombenzol. Das Gemisch siedet bei 95°C, während die Reinstoffe bei 100°C (Wasser) und 156°C (Brombenzol) sieden. Die Trägergasdestillation kommt insbesondere zur Auftrennung von miteinander nicht mischbaren Komponenten mit relativ hohem Siedepunkt (z.B. Glycerin), von Stoffen, die bereits vor Erreichen des Siedepunktes zerfallen oder polymerisieren (Fettsäuren) und von Stoffen, die sehr schwer handhabbar sind und bei denen ein direktes Aufheizen bis zum Sieden gefährlich sein kann (z. B. Terpentin).

Das bekannteste Beispiel für eine Trägergasdestillation ist die Wasserdampfdestillation, wobei Wasserdampf das Trägergas ist. Sie findet beispielsweise in großem Maße Anwendung in der erdölverarbeitenden Industrie, zur Entfernung leichter Kohlenwasserstoffe aus Absorberölen, in der Kohleindustrie zur Wasserdampfdestillation von Kohlenstoffschnitten aus der Steinkohlendestillation, zur Abtrennung von Terpentin aus Harzen der Kautschukindustrie und in der präparativen organischen Chemie. Die Wasserdampfdestillation ist eine spezielle Ausführung der Azeotrop- oder Extraktivdestillation, wie sie in der oben genannten Publikation auf den Seiten 4-50 bis 4-52 beschrieben ist. Der verfahrenstechnische Effekt dieses Verfahrens beruht darauf, daß durch Zugabe eines Ersatzstoffes (eines Schleppmittels) der azeotrope Punkt überwunden wird und damit die gewünschte Aufkonzentration über den azeotropen Punkt hinaus erreicht wird.

Alle diese Verfahren haben den Nachteil, daß in das zu destillierende System ein Zusatzstoff (Schleppmittel) eingebracht wird, welches über einen zusätzlichen Verfahrensschritt wieder aus dem System abgetrennt werden muß.

Eine weitere bekannte Methode zur Entfernung höher siedender Stoffe aus einem Stoffgemisch stellt das Strippen dar. Das Strippen hat den Nachteil, daß immer nur eine stark verdünnte Lösung des Schwersieders bzw. Mittelsieders in dem Strippmedium erhalten und dementsprechend eine aufwendige und kostenintensive Abtrennung erforderlich wird. Das Verfahren ist in der Regel nur dann wirtschaftlich, wenn eine Abtrennung der Produkte durch Phasentrennung gelingt, d.h. wenn das Stoffgemisch eine Mischungslücke aufweist.

Die DE-A-27 30 561 beschreibt ein Verfahren zur Abtrennung von sauren Gasen und von Ammoniak aus einer verdünnten wässrigen Lösung durch Gegenstromdestillation mit Wasserdampf. Die Lösung besteht aus Wasser, Ammoniak und Verunreinigungen und wird in Wasserdampf und Ammoniak über Kopf (Leicht- und Mittelsieder) und Wasser und Verunreinigungen im Sumpf (Mittel- und Hochsieder) aufgetrennt.

Die DE 43 24 410 C beschreibt ein Verfahren zur Entfernung von Ammonium aus dem Zentratwasser einer biologischen Abwasserreinigungsanlage durch Behandlung mit Wasserdampf in einer Stripp-Kolonne. Das Zentratwasser enthält Ammoniak, Wasser und Salze. Am Kopf der Kolonne fällt Wasser und Ammoniak (Leicht- und Mittelsieder) und am Sumpf der Kolonne fällt Wasser und eine Salzfraktion (Mittel- und Hochsieder) an.

In Perry's Chemical Engineers' Handbook, 1985, 13-5 bis 13-10 sind Stripp-Verfahren beschrieben, bei denen eine Abtrennung des Leichtsieders aus einem Gemisch von Leicht-, Mittel- und Hochsieder erzielt wird.

Der vorliegenden Erfindung liegt daher die Aufgabe zugrunde, ein einfaches und schonendes Verfahren zur Abtrennung eines Mittelsieders bzw. einer Fraktion aus Leicht- und Mittelsieder aus einem Gemisch, das Leicht-, Mittel- und Hochsieder enthält, zur Verfügung zu stellen.

Überraschenderweise wurde nun gefunden, daß diese Aufgabe gelöst wird, wenn man das erwähnte Gemisch in einer Kolonne im Sumpf mit Leichtsiederdampf behandelt.

Gegenstand der vorliegenden Erfindung ist daher ein Verfahren zur Abtrennung einer Leicht- und Mittelsieder- enthaltenden Fraktion (L,M- Fraktion) und einer Leicht- und Hochsieder-enthaltenden Fraktion (L,H-Fraktion) aus einem Leicht-, Mittel- und Hochsieder- enthaltenden homogenen Gemisch (L,M,H-Gemisch), das dadurch gekennzeichnet ist, daß das L,M,H-Gemisch in einer Kolonne mit Leichtsiederdampf behandelt und in eine L,M-Fraktion und eine L,H-Fraktion aufgetrennt wird. Der Mittelsieder reichert sich im Leichtsiederdampf an, so daß die L,M-Fraktion oberhalb der Einspeisestelle des Gemisches gewonnen werden kann und die L,H-Fraktion am Sumpf anfällt.

Die Zuleitung des aufzutrennenden Gemisches erfolgt im allgemeinen direkt auf den Kopf der Kolonne. Vorzugsweise erfolgt die Behandlung des Gemisches mit dem Leichtsiederdampf im Gegenstrom und insbesondere durch Einleiten von Leichtsiederdampf in den Sumpf der Kolonne oder durch Zuführen von flüssigem Leichtsieder und Aufkochen im Sumpf. Als Leichtsieder, welcher der Kolonne zugeführt wird, verwendet man üblicherweise den gleichen, als den, der sich im Gemisch befindet.

Als besonders zweckmäßig hat es sich erwiesen, die Behandlung mit Leichtsiederdampf in einer Strippkolonne vorzunehmen. Diese kann eine übliche Bodenkolonne, z.B. eine Glocken- oder Siebbodenkolonne oder mit einer üblichen Packung versehen sein, z.B. Raschig-Ringen, Pall-Ringen, Sattelkörpern etc., und sie weist vorzugsweise eine theoretische Bodenzahl im Bereich von 5 bis 100 auf. Je nach Trennproblem kann die Bodenzahl auch mehr als 100 betragen.

Durch das Einleiten von Leichtsiederdampf in den Sumpf der Kolonne reichert sich der Mittelsieder im Leichtsiederdampf an. Die Gewinnung der L,M-Fraktion erfolgt zweckmäßigerweise in Höhe des Zulaufbodens oder oberhalb davon. Vorzugsweise wird die L,M-Fraktion über Kopf der Kolonne abgezogen.

Die L,M-Fraktion enthält den Leichtsieder im allgemeinen in großem bis sehr großem Überschuß. Es ist daher besonders vorteilhaft, die L,M-Fraktion zur Anreicherung an Mittelsieder einer Aufkonzentrierung zuzuführen. Dies kann beispielsweise dadurch erfolgen, daß man die L,M-Fraktion in eine separate mehrstufige Kolonne führt, die als Verstärkerkolonne dient, in welcher eine Abtrennung von Leichtsieder vorgenommen wird, so daß eine an Mittelsieder reichere L,M-Fraktion oder sogar reiner Mittelsieder erhalten wird.

Besonders bevorzugt ist es, die Verstärkerkolonne als separate Destillationskolonne vorzusehen oder sie direkt auf die Kolonne, in welcher die Behandlung mit Leichtsiederdampf erfolgt, aufzusetzen und den Leichtsieder über Kopf abzudestiliieren. Die angereicherte L, M-Fraktion bzw. der Mittelsieder kann über eine Seitenstromentnahme des Kolonnenrücklaufs ausgeschleust werden. Besonders bevorzugt ist dabei die Anwendung einer im wesentlichen vertikal eingesetzten Trennwand. Die Zuführung des aufzutrennenden Gemisches erfolgt dabei etwa in der Mitte der Stripp-Verstärkerkolonne. Auf der Höhe dieser Zuführung ist über eine Höhe von im allgemeinen 1 bis 10, vorzugsweise 1 bis 5, theoretischen Böden eine Trennwand in der Kolonne derart angebracht, daß die Kolonne vertikal in zwei separate Abschnitte getrennt wird, wobei sich die Zuspeisung etwa in der Mitte der Trennwand befindet. Auf diese Weise kann auf der der Einspeisestelle gegenüberliegenden Seite die an Mittelsieder angereicherte Fraktion im Bereich der Trennwand entnommen werden. Durch die Trennwand wird die Entnahmestelle von der Zuspeisestelle getrennt. Auf beiden Seiten der Trennwand liegen gleiche Konzentrationen an Mittelsieder vor, wobei sich aber nur auf der Seite der Einspeisestelle Hochsieder in dem Gemisch befindet. Die an Mittelsieder angereicherte Fraktion wird vorzugsweise in etwa auf Höhe der Zuspeisung oder gegebenenfalls etwas darunter entnommen.

Alternativ zur Ausführungsform mit Trennwand kann auch eine Seitenkolonne derart an die Stripp-Verstärkerkolonne angesetzt werden, daß die Seitenkolonne jeweils ein oder mehrere Trennstufen oberhalb und unterhalb von der Einspeisestelle gas- und flüssigkeitsseitig mit der Stripp-Verstärkerkolonne verbunden ist und die Entnahme der Mittelsieder reicheren Fraktion über die Seitenkolonne erfolgt. Die Seitenkolonne ist so gestaltet, daß ein Übertritt von Hochsieder in die Entnahmestelle der Seitenkolonne vermieden wird. Geeignete Maßnahmen hierzu sind dem Fachmann bekannt.

Gegebenenfalls wird über dem Zulaufboden oder im Brüdenabzug noch ein Tröpfchenabscheider (Demister oder eine andere übliche Vorrichtung) derart installiert, daß ein Mitreißen des Hochsieders durch Tröpfchen verhindert wird.

Die durch die erwähnte Verstärkerkolonne an Mittelsieder angereichterte L,M-Fraktion kann gegebenenfalls in einer weiteren Kolonne mit Verstärker- und Abtriebsteil aufkonzentriert oder aufgetrennt werden.

Eine weitere vorteilhafte Ausführungsform des erfindungsgemäßen Verfahrens besteht darin, die Brüden der Stripp- bzw. der Strippdestillationskolonne, gegebenenfalls nach Kompression in bekannter Weise, wieder als Leichtsieder oder Leichtsiederdampf in den Sumpf der Behandlungskolonne zu leiten. Da im erfindungsgemäßen Verfahren eine Direktbeheizung mit Leichtsieder- bzw. Leichtsiederdampf erfolgt und die Brüdenkompression nur den Differenzdruck über die Kolonne überwinden muß, läßt sich der Energieverbrauch und gleichzeitig der Kühlaufwand drastisch absenken.

Die Behandlungskolonne und/oder Verstärker bzw. Destillationskolonne können bei Normaldruck, Unterdruck oder Überdruck und kontinuierlich oder diskontinuierlich betrieben werden. Die Bedingungen richten sich dabei natürlich nach den zu trennenden Gemischen und können vom Fachmann in üblicher Weise ermittelt werden. Entscheidend ist die Temperatur des Leichtsiederdampfes, sie muß so hoch sein, daß die L,M-Fraktion abdestilliert und die L,H-Fraktion im Sumpf der Kolonne anfällt.

Das erfindungsgemäße Verfahren hat den Vorteil, daß es einfach durchführbar ist und auf den Zusatz von Fremdstoff verzichtet werden kann. Die Konzentration an Mittelsieder ist über den gesamten Prozeßbereich gering. Die Verweilzeit im Prozeß, d.h. in den Kolonnen, ist relativ kurz. Aufgrund der einfachen Prozeßgestaltung sind nur geringe Investitionen erforderlich. Zudem ist das Verfahren nahezu beliebig scale-upfähig.

Das erfindungsgemäße Verfahren ermöglicht eine äußerst schonende Abtrennung einer L,M-Fraktion bzw. des Mittelsieders aus einem Gemisch, das Leicht-, Mittel- und Schwersieder enthält, auf dem Temperaturniveau der Siedetemperatur des Leichtsieders. Das Verfahren ist deshalb besonders vorteilhaft, wenn es erforderlich ist, einen thermisch empfindlichen Mittelsieder, der beispielsweise zur Zersetzung oder zur Polymerisation neigt, möglichst schonend aus einem L,M,H-Gemisch abzutrennen. Besonders vorteilhaft ist das Verfahren, wenn der im Rohgemisch enthaltene Hochsieder in reiner oder hoch angereicherter Form hoch-viskos ist, als Feststoff ausfällt oder in höherer Konzentration dazu neigt, eine chemische Reaktion, beispielsweise eine Polymerisation, einzugehen. Das erfindungsgemäße Verfahren gewährleistet nämlich, daß der Hochsieder, in dem Leichtsieder gelöst, abgezogen werden kann. Dadurch müssen nur Lösungen gehandhabt werden, d.h. Viskositätsprobleme, Feststoffprobleme etc. werden vermieden.

Das erfindungsgemäße Verfahren ist besonders geeignet zur Gewinnung von thermisch empfindlichen Produkten. Beispiele hierfür sind:
- Gewinnung einer wäßrigen Hydroxylaminlösung aus einer wäßrigen Lösung eines Hydroxylaminsalzes,
- Gewinnung von polymerisierbaren Verbindungen, beispielsweise die Rückgewinnung von Styrol aus Gemischen, die bei der Styrolproduktion anfallen,
- Gewinnung von chlorierten Kohlenwasserstoffen, beispielsweise Rückgewinnung von Dichlorethan aus Gemischen, die bei der Dichlorethanproduktion anfallen,
- Rückgewinnung von Carbonsäuren und Aldehyden aus den Abstreifsäuren der Cyclohexanoxidation mit Luft oder der Adipinsäureproduktion,
- Abtrennung von organischen Säuren und Aldehyden, wie Essigsäure, Acrylsäure, Methacrolein oder Methacrylsäure aus Produktionsabwässern, die gegebenenfalls noch Hochsieder, organische Verbindungen, Salze (Katalysatoren) etc. enthalten und
- Abtrennung von Aminen aus Ammoniak und Hochsieder enthaltenden Gemischen.

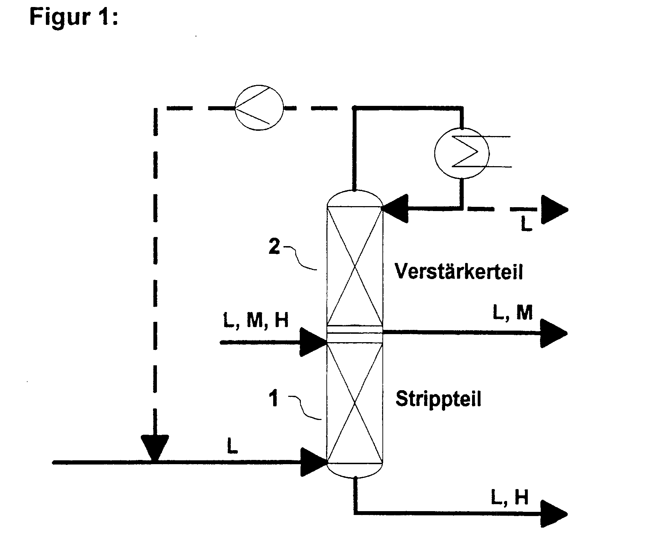

Das erfindungsgemäße Verfahren wird weiter anhand des in der Figur 1 gezeigten Schemas erläutert:
Die Figur 1 zeigt eine Kolonne zur Auftrennung eines L,M,H-Gemisches, die eine Strippkolonne 1 umfaßt, auf die eine Verstärkerkolonne 2 aufgesetzt ist. Das aufzutrennende Gemisch wird direkt auf den Kopf der Strippkolonne 1 geführt. Im Gegenstrom dazu wird Leichtsiederdampf L in den Sumpf der Strippkolonne 1 geleitet. Am Sumpf der Kolonne wird eine L,H-Fraktion abgezogen, während am Kopf der Kolonne eine im wesentlichen hochsiederfreie L,M-Fraktion anfällt. Diese wird in der Verstärkerkolonne aufkonzentriert, d.h. an Mittelsieder angereichert. Die angereicherte L,M-Fraktion wird etwas oberhalb der Einspeisestelle des aufzutrennenden Gemisches abgezogen. Am Kopf der Verstärkerkolonne fällt Leichtsieder an, der gegebenenfalls kondensiert und einer weiteren Verwertung zugeführt werden kann. Alternativ dazu kann der Leichtsieder direkt oder nach Kompression wieder in den Sumpf der Strippkolonne 1 geleitet werden.
Die nachfolgenden Beispiele erläutern die Erfindung ohne sie zu begrenzen.

### Beispiel 1

### Gewinnung einer wäßrigen Hydroxylamin(HA)-Lösung aus einer Hydroxylamin (HA)-Ammoniumsulfat (AS)-Lösung mit einer Strippkolonne

Eine wäßrige Lösung, enthaltend 218 g HA/l udn 680 g AS/l, wurde mit 300 ml/h auf die oberste Stufe einer Strippkolonne gegeben. Die Strippkolonne aus Glas, 2 m hoch, 35 mm Durchmesser, war über eine Höhe von 1,8 m mit 3-mm-Raschigringen aus Glas gefüllt. Dem Sumpf der Kolonne wurden 1000 ml/h destilliertes Wasser zugeführt. Die Kolonne stand unter einem Druck von 40 kPa. Die Sumpftemperatur betrug 84°C. Über Kopf der Kolonne wurden 1000 ml/h wäßrige, salzfreie HA-Lösung mit 39,0 g HA/h abdestilliert, entsprechend 59,6 % des gesamten HA im Feed. Aus dem Sumpf der Kolonne wurden 300 ml/h Ammoniumsulfatlösung mit einem Gehalt an HA von 86,0 g HA/l abgezogen. Das entspricht 39,4 % des gesamten HA im Feed.

Die Konzentration an HA in der Kolonne betrug maximal 100 g/l. Die Flüssigkeitsmenge in der Kolonne betrug je nach Belastung 20-225 ml. Die Verweilzeit der Flüssigkeit in der Kolonne betrug damit nur 1,5-10 min. Die Zersetzungsrate ist bei dieser geringen Konzentration und innerhalb der kurzen Zeit gering.

Weitere Versuche sind in nachstehender Tabelle aufgelistet.

**Tabelle 1**

| Abtrennung einer wäßrigen HA-Lösung aus einer wäßrigen HA-/AS-Lösung | | | | | | | | |
|---|---|---|---|---|---|---|---|---|
| Feed ml/h | HA-Gehalt g/l | H₂O/Dampf | Druck kPa | Kopftemperatur °C | HA über Kopf | | HA im Sumpf | |
| | | | | | g/l | (%) | g/l | (%) |
| 318 | 222 | 1156* | 50,0 | 81,0 | 40,5 | 66,9 | 48,6 | 21,2 |
| 170 | 222 | 1060* | 70,0 | 90,5 | 22,8 | 65,6 | 45,2 | 17,2 |
| 370 | 219 | 1475∧ | 100,4 | 100,9 | 32,4 | 62,2 | 75,6 | 47,8 |
| 179 | 105,5 | 1530∧ | 100,8 | 100,6 | 9,0 | 70,5 | 29,0 | 27,6 |
| 245 | 220,0 | 1530∧ | 100,8 | 100,6 | 28,0 | 73,3 | 54,0 | 42,2 |
| 150 | 4 | 990∧ | 100,8 | 100,0 | 0,4 | 68,1 | 0,8 | 15,7 |
| 150 | 5,6 | 990∧ | 100,8 | 99,9 | 0,6 | 73,0 | 0,4 | 5,6 |
| 119 | 204 | 1063∧ | 101,5 | 100,4 | 15,4 | 67,6 | 40,5 | 19,7 |

| | | | | | | | | |
|---|---|---|---|---|---|---|---|---|
| * Der Sumpf der Kolonne wurde über einen Thermostaten beheizt. | | | | | | | | |
| ∧ Das Wasser wurde zur gleichzeitigen Sumpfbeheizung als überhitzter Dampf zugeführt. | | | | | | | | |

### Beispiel 2

### Abtrennung einer wäßrigen HA-Lösung aus einer wäßrigen HA-/-Na₂So₄-Lösung mit einer Strippkolonne

Die wäßrige Lösung aus Beispiel 3, enthaltend 11 Gew.% HA und 23,6 Gew.% Na₂SO₄, wurde mit 978 g/h auf die oberste Stufe einer Strippkolonne gegeben. Die Strippkolonne aus Email, 2 m hoch, 50 mm Durchmesser, war mit 5-mm-Raschigringen aus Glas gefüllt. Die Kolonne stand unter Normaldruck. In den Sumpf der Kolonne wurde Dampf mit 2,5 bar absolut geleitet. Das Dampf/Feed-Verhältnis betrug 2,9:1. Aus dem Sumpf der Kolonne wurden 985 g/h Natriumsulfatlösung mit einem Gehalt an HA von 1,7 g HA/L abgezogen. Das entspricht 1% des gesamten HA im Feed. Über Kopf der Kolonne wurden 3593 g/h wäßrige, salzfreie HA-Lösung mit 36,8 g HA/l abdestilliert, entsprechend 99,2 % des gesamten HA im Feed.

Weitere Versuche sind in nachstehender Tabelle aufgelistet.

**Tabelle 2:**

| Abtrennung einer wäßrigen HA-Lösung aus einer wäßrigen HA-/Natriumsulfatlösung | | | | | | | | |
|---|---|---|---|---|---|---|---|---|
| Feed g/h | HA-Gehalt g/l | Dampf /Feed kg/kg | Druck kPa | Kopftemperatur °C | HA über Kopf | | HA im Sumpf | |
| | | | | | g/l | (%) | g/l | (%) |
| 945 | 135 | 2,6 | 200 | 125,4 | 34,0 | 84,0 | 7,8 | 17 |
| 970 | 136 | 2,7 | 101 | 106,3 | 35,5 | 96,2 | 3,3 | 2,5 |
| 980 | 80 | 2,8 | 101 | 107,0 | 2,1 | 95,5 | 0,45 | 5,7 |

### Beispiel 3

### Gewinnung einer wäßrigen HA-Lösung aus einer wäßrigen HA-/Natriumsulfatlösung mit einer Stripp-Destillationskolonne

Eine wäßrige Lösung, enthaltend 221 g HA/l und 540 g AS/l, wurde mit 202 ml/h auf den 11. Boden einer Glockenbodenkolonne aus Glas, 35 mm Durchmesser, 1,6 m Gesamthöhe, 21 Böden (unterster Boden = Boden 1), gegeben. Dem Sumpf der Kolonne wurden 1300 ml/h Wasserdampf (ca. 125°C) zugeführt. Der Druck in der Kolonne betrug 99 kPa. Am Kopf der Kolonne wurden bei einer Kopftemperatur von 99,8°C und einem Rücklaufverhältnis von 1:3 (Rücklauf: Zulauf) 180 ml/h weitgehend HA-freies WAsser (0o,6 g HA/l) abgezogen. Die wäßrige HA-Lösung (Produktlösung) wurde mit 1180 ml/h und einer Konzentration von 44 g/l über einen Seitenstrom von Boden 12 abgezogen. Am Sumpf der Kolonne wurden 400 ml/h Salzlösung abgezogen.

### Beispiel 4

### Gewinnung einer wäßrigen HA-Lösung aus einer wäßrigen HA-/Natriumsulfatlösung mit einer Strippdestillationskolonne unter Aufkonzentrierung über einen Seitenabzug

Eine wäßrige HA-Lösung gemäß Beispiel 3, enthaltend 11 Gew.% HA und 23,6 Gew.% Na₂SO₄, wurde auf den 11. theoretischen Boden einer Glockenbodenkolonne aus Glas, 50 mm Durchmesser (Bodenanzahl entsprechend 30 theoretischen Böden) gegeben. Dem Sumpf der Kolonne wurde Wasserdampf, 2,5 bar absolut, Temperatur ca. 125°C, zugeführt. Der Druck in der Kolonne betrug 101 kPA. Am Kopf der Kolonne wurde weitgehend HA-freies Wasser (0,05 g, HA/l) abgezogen. Die wäßrige, salzfreie HA-Lösung (Produktlösung) wurde mit einer Konzentration von 8,3 Gew.% über einen Seitenstrom von Boden 12 flüssig entnommen. Am Sumpf der Kolonne wurde die Salzlösung mit einem Restgehalt an HA von 0,2 Gew.% abgezogen.

### Beispiel 5

### Aufkonzentration einer nach bereits erfolgter Auftrennung erhaltene salzfreien wäßrigen Hydroxylaminlösung durch Destillation

In einer Glasglockenbodenkolonne, 50 mm Durchmesser, 30 Glockenböden, wurden kontinuierlich auf den 8. Boden 1600 g/h einer 8,3 gew.%igen wäßrigen, salzfreien, stabilisierten Hydroxylaminlösung eingespeist. Auf den obersten Boden, Boden Nr. 30, wurde zusätzlich eine geringe Menge an Stabilisator, gelöst in Hydroxylamin-Lösung, in die Kolonne dosiert. Das Rücklaufverhältnis wurde auf 0,5 eingestellt. Über Kopf der Kolonne wurde Wasser abdestilliert. Das Destillat enthielt noch eine Restmenge an Hydroxalamin von 0,07 Gew.%. Aus dem Sumpf der Kolonne wurden ca. 240 ml/h einer 50 gew%igen Hydroxylaminlösung über eine Pumpe ausgetragen.

## Patentansprüche

1. Verfahren zur Abtrennung einer Leicht- und Mittelsieder-enthaltenden Fraktion (L,M-Fraktion) aus einem homogenen Gemisch aus Leicht-, Mittel- und Hochsieder (L,M,H-Gemisch), **dadurch gekennzeichnet, daß** das L,M,H-Gemisch in einer Kolonne im Sumpf mit Leichtsiederdampf behandelt und in eine L,M-Fraktion und eine L,H-Fraktion aufgetrennt wird.

2. Verfahren nach Anspruch 1, **dadurch gekennzeichnet, daß** das L,M,H-Gemisch durch Einleiten von Leichtsiederdampf in den Sumpf der Kolonne behandelt wird.

3. Verfahren nach Anspruch 1 oder 2, **dadurch gekennzeichnet, daß** die Behandlung im Gegenstrom erfolgt.

4. Verfahren nach einem der vorhergehenden Ansprüche, **dadurch gekennzeichnet, daß** als Kolonne eine Strippkolonne verwendet wird.

5. Verfahren nach einem der vorhergehenden Ansprüche, **dadurch gekennzeichnet, daß** die L,M-Fraktion in Höhe des Zulaufbodens oder oberhalb davon, insbesondere über Kopf der Kolonne, abgezogen wird.

6. Verfahren nach einem der vorhergehenden Ansprüche, **dadurch gekennzeichnet, daß** die L,M-Fraktion in eine Verstärkerkolonne geleitet wird, in welcher eine Abtrennung des Leichtsieders vorgenommen wird, so daß eine an Mittelsieder reichere L,M-Fraktion erhalten wird.

7. Verfahren nach Anspruch 6, **dadurch gekennzeichnet, daß** die Verstärkerkolonne auf die Behandlungskolonne aufgesetzt, Leichtsieder über Kopf abdestilliert und die an Mittelsieder angereicherte L,M-Fraktion über eine Seitenstromentnahme ausgeschleust wird.

8. Verfahren nach Anspruch 7, **dadurch gekennzeichnet, daß** die Behandlungskolonne mit dem Sumpf einer Seitenkolonne und die Verstärkerkolonne mit dem Kopf der Seitenkolonne verbunden ist.

9. Verfahren nach Anspruch 7, **dadurch gekennzeichnet, daß** die Stripp-/Verstärkerkolonne in Höhe der Einspeisestelle des L,M,H-Gemisches mit einer im wesentlichen vertikalen Trennwand ausgestattet ist.

10. Verfahren nach einem der vorhergehenden Ansprüche, **dadurch gekennzeichnet, daß** die L,M-Fraktion in einer weiteren Kolonne mit Verstärker- und Abtriebsteil aufgetrennt oder an Mittelsieder aufkonzentriert wird.

11. Verfahren nach einem der vorhergehenden Ansprüche, **dadurch gekennzeichnet, daß** der in der Kolonne oder Verstärkerkolonne abgezogene Leichtsieder, gegebenenfalls nach Kompression, zumindest teilweise wieder in den Sumpf der Kolonne geleitet wird.

12. Verfahren nach einem der vorhergehenden Ansprüche zur Gewinnung von thermisch empfindlichen Mittelsiederprodukten.

## Claims

1. A process for separating a fraction containing low and middle boilers (L,M fraction) from a homogeneous mixture comprising low, middle and high boilers (L,M,H mixture), which comprises treating the L,M,H mixture in a column with low-boiler vapor in the bottom and separating it into an L,M fraction and an L,H fraction.

2. A process as claimed in claim 1, wherein the L,M,H mixture is treated by passing low-boiler vapor into the bottom of the column.

3. A process as claimed in claim 1 or 2, wherein treatment takes place in countercurrent.

4. A process as claimed in any of the preceding claims, wherein the column used is a stripping column.

5. A process as claimed in any of the preceding claims, wherein the L,M fraction is taken off at the vertical level of the infeed tray or above, in particular from the top of the column.

6. A process as claimed in any of the preceding claims, wherein the L,M fraction is passed into a rectifying column in which the low-boiling component is separated off so as to give an L,M fraction richer in medium-boiling component.

7. A process as claimed in claim 6, wherein the rectifying column is mounted onto the treatment column, low-boiling component is distilled off from the top, and the L,M fraction enriched with medium-boiling component is removed by way of a sidestream offtake.

8. A process as claimed in claim 7, wherein the treatment column communicates with the bottom of a side column and the rectifying column communicates with the top of the side column.

9. A process as claimed in claim 7, wherein the stripping/rectifying column is equipped, at the level of the infeed site of the L,M,H mixture, with an essentially vertical dividing wall.

10. A process as claimed in any of the preceding claims, wherein, in a further column with rectifying section and stripping section, the L,M fraction is separated or is concentrated in terms of medium-boiling component.

11. A process as claimed in any of the preceding claims, wherein at least some of the low-boiling component taken off in the column or rectifying column is passed back, possibly after compression, into the bottom of the column.

12. A process as claimed in any of the preceding claims for obtaining thermally sensitive middle-boiling products.

## Revendications

1. Procédé de séparation d'une fraction contenant des substances à bas et moyen points d'ébullition (fraction L, M) à partir d'un mélange homogène de substances à bas, moyen et haut points d'ébullition (mélange L, M, H), **caractérisé par le fait que** le mélange L, M, H est, dans une colonne, traité dans le fond par une vapeur de substance à bas point d'ébullition et est séparé en une fraction L, M et une fraction L, H.

2. Procédé suivant la revendication 1, **caractérisé en ce que** le mélange L, M, H est traité par introduction de vapeur de substance à bas point d'ébullition dans le fond de la colonne.

3. Procédé suivant l'une des revendications 1 et 2, **caractérisé en ce que** le traitement a lieu en contre-courant.

4. Procédé suivant l'une des revendications précédentes, **caractérisé en ce que**, comme colonne, on utilise une colonne de stripage.

5. Procédé suivant l'une des revendications précédentes, **caractérisé en ce que** la fraction L, M est soutirée à hauteur du plateau d'alimentation ou au-dessus de celui-ci, en particulier par la tête de la colonne.

6. Procédé suivant l'une des revendications précédentes, **caractérisé en ce que** la fraction L, M est conduite dans une colonne de rectification dans laquelle est effectuée une séparation de la substance à bas point d'ébullition de façon à obtenir une fraction L, M plus riche en substance à point d'ébullition moyen.

7. Procédé suivant la revendication 6, **caractérisé en ce que** la colonne de rectification est montée sur la colonne de traitement, **en ce que** la substance à bas point d'ébullition est séparée par distillation par la tête et **en ce que** la fraction L, M enrichie en substance à point d'ébullition moyen est évacuée par un prélèvement de courant latéral.

8. Procédé suivant la revendication 7, **caractérisé en ce que** la colonne de traitement est reliée au fond d'une colonne latérale et **en ce que** la colonne de rectification est reliée à la tête de la colonne latérale.

9. Procédé suivant la revendication 7, **caractérisé en ce que** la colonne de stripage/rectification est, à hauteur de l'emplacement d'alimentation du mélange L, M, H, équipée d'une paroi séparatrice sensiblement verticale.

10. Procédé suivant l'une des revendications précédentes, **caractérisé en ce que** la fraction L, M est séparée dans une autre colonne comportant une partie de rectification et une partie d'entraînement ou concentrée en substance à point d'ébullition moyen.

11. Procédé suivant l'une des revendications précédentes, **caractérisé en ce que** la substance à bas point d'ébullition soutirée dans la colonne ou la colonne de rectification est, éventuellement après compression, ramenée au moins partiellement dans le fond de la colonne.

12. Procédé suivant l'une des revendications précédentes pour la production de produits à point d'ébullition moyen thermiquement sensibles.
